# EUROPEAN PATENT APPLICATION

(11) **EP 2 573 737 A1**
(43) Date of publication of application: **27.03.2013**
(21) Application number: 11783366.5
(22) Date of filing: 21.04.2011
(51) Int. Cl.: G06T 19/00

(54) **OBJECT DISPLAYING APPARATUS, OBJECT DISPLAYING SYSTEM, AND OBJECT DISPLAYING METHOD**

(30) Priority: 17.05.2010 JP 2010113309
(71) Applicant: NTT DOCOMO, INC., Chiyoda-ku Tokyo 100-6150 (JP)
(72) Inventor: OTA Manabu, Tokyo 100-6150 (JP); MORINAGA Yasuo, Tokyo 100-6150 (JP)
(74) Representative: Viering, Jentschura & Partner
(86) International application number: PCT/JP2011/059862
(87) International publication number: WO 2011/145429

(57) **Abstract**

In an object displaying apparatus, when, in the case where a virtual object is displayed superimposed on an image of the real space according to information about the layout position of the virtual object, the virtual object is displayed overlapping a superimposition inhibit object, display control is performed to display the virtual object transparently so that the superimposition inhibit object is not hidden by the virtual object. It is thereby possible to preferentially display the superimposition inhibit object.

## Description

### Technical Field

The present invention relates to an object displaying apparatus, an object displaying system, and an object displaying method.

### Background Art

In recent years, a service using AR (Augmented Reality) technology has been developed and provided. For example, a technique that acquires an object placed in the vicinity of the located position of an object displaying apparatus and displays an object including various information and images superimposed on an image acquired by a camera included in the object displaying apparatus is known. Further, a technique that makes control so that a virtual space image is not superimposed on a specified region in a real space image at the time of superimposing the virtual space image on the real space image is known (for example, see Patent Literature 1).

### Citation List

### Patent Literature

PTL 1: Japanese Unexamined Patent Application Publication No. 2009-15648

### Summary of Invention

### Technical Problem

However, because a region having a specific color within a real space image is extracted as a region on which a virtual object is not superimposed in the related art, when an object to be preferentially displayed in the real space does not have the specific color, it is not possible to make control so that a virtual object is not superimposed on that object. Specifically, it is not possible to make display control that displays a virtual space image after determining the availability of superimposition of a virtual object on the basis of attributes of each object captured in a real space image.

The present invention has been accomplished to solve the above problems and an object of the present invention is thus to provide an object displaying apparatus, an object displaying system, and an object displaying method that can make appropriate display control so that a virtual object is not superimposed on an object to be preferentially displayed in a real space image in the AR technology.

### Solution to Problem

To solve the above problem, an object displaying apparatus according to one embodiment of the present invention is an object displaying apparatus for displaying an object superimposed on an image of a real space, including a virtual object information acquisition means for acquiring virtual object information related to a virtual object placed in the real space and containing information related to a layout position of the virtual object, a superimposition inhibit object information acquisition means for acquiring superimposition inhibit object information related to a superimposition inhibit object existing in the real space and where superimposed display of the virtual object is inhibited, a photographing means for taking an image of the real space, an image analysis means for extracting the superimposition inhibit object from the image of the real space photographed by the photographing means based on the superimposition inhibit object information received by the superimposition inhibit object information acquisition means, a virtual object display control means for, when the virtual object overlapping the superimposition inhibit object extracted by the image analysis means exists in a case where the virtual object is placed in the image of the real space based on the virtual object information acquired by the virtual object information acquisition means, controlling display of the virtual object so as not to hide the superimposition inhibit object, and a display means for displaying the virtual object superimposed on the image of the real space based on the display control by the virtual object display control means.

Further, to solve the above problem, an object displaying system according to one embodiment of the present invention is an object displaying system including an object displaying apparatus for displaying an object superimposed on an image of a real space, and a server capable of communicating with the object displaying apparatus, the object displaying apparatus including a self-position measurement means for measuring a located position of the object displaying apparatus, a position information transmitting means for transmitting position information related to the located position to the server, a virtual object information acquisition means for acquiring virtual object information related to a virtual object placed in the real space and containing information related to a layout position of the virtual object from the server, a superimposition inhibit object information acquisition means for acquiring superimposition inhibit object information related to a superimposition inhibit object existing in the real space and where superimposed display of the virtual object is inhibited from the server, a photographing means for taking an image of the real space, an image analysis means for extracting the superimposition inhibit object from the image of the real space photographed by the photographing means based on the superimposition inhibit object information acquired by the superimposition inhibit object information acquisition means, a virtual object display control means for, when the virtual object overlapping the superimposition inhibit object extracted by the image analysis means exists in a case where the virtual object is placed in the image of the real space based on the virtual object information received by the virtual object information acquisition means, controlling display of the virtual object so as not to hide the superimposition inhibit object, and a display means for displaying the virtual object superimposed on the image of the real space based on the display control by the virtual object display control means, and the server including a position information receiving means for receiving the position information from the object displaying apparatus, a virtual object information storage means for storing the virtual object information, a virtual object extraction means for extracting virtual object information of a virtual object located within a pre-specified distance from a position indicated by the position information received by the position information receiving means from the virtual object information storage means, a superimposition inhibit object information storage means for storing the superimposition inhibit object information, a superimposition inhibit object extraction means for extracting the superimposition inhibit object information of the superimposition inhibit object located within a pre-specified distance from a position indicated by the position information received by the position information receiving means from the superimposition inhibit object information storage means, and an object information transmitting means for transmitting the virtual object information extracted by the virtual object extraction means and the superimposition inhibit object information extracted by the superimposition inhibit object extraction means to the object displaying apparatus.

Further, to solve the above problem, an object displaying method according to one embodiment of the present invention is an object displaying method in an object displaying apparatus for displaying an object superimposed on an image of a real space, including a virtual object information acquisition step of acquiring virtual object information related to a virtual object placed in the real space and containing information related to a layout position of the virtual object, a superimposition inhibit object information acquisition step of acquiring superimposition inhibit object information related to a superimposition inhibit object existing in the real space and where superimposed display of the virtual object is inhibited, a photographing step of taking an image of the real space, an image analysis step of extracting the superimposition inhibit object from the image of the real space photographed in the photographing step based on the superimposition inhibit object information received in the superimposition inhibit object information acquisition step, a virtual object display control step of, when the virtual object overlapping the superimposition inhibit object extracted in the image analysis step exists in a case where the virtual object is placed in the image of the real space based on the virtual object information received in the virtual object information acquisition step, controlling display of the virtual object so as not to hide the superimposition inhibit object, and a display step of displaying the virtual object superimposed on the image of the real space based on the display control in the virtual object display control step.

In the object displaying apparatus, the object displaying system and the object displaying method according to the present invention, when, in the case where a virtual object is displayed superimposed on an image of the real space according to information about the layout position of the virtual object, the virtual object is displayed overlapping a superimposition inhibit object, display control is performed so that the superimposition inhibit object is not hidden by the virtual object. It is thereby possible to preferentially display the superimposition inhibit object.

The object displaying apparatus according to one embodiment of the present invention may further include a self-position measurement means for measuring a located position of the object displaying apparatus, and a position information transmitting means for transmitting position information related to the located position, and the virtual object information acquisition means may acquire the virtual object information extracted based on the position information, and the superimposition inhibit object information acquisition means may acquire the superimposition inhibit object information extracted based on the position information.

In this case, information of the virtual object and information of the superimposition inhibit object existing in the vicinity of the located position of the object displaying apparatus are acquired. The object displaying apparatus can thereby appropriately acquire the virtual object information of the virtual obj ect to be displayed and the superimposition inhibit object information of the superimposition inhibit object for which whether superimposed display is allowed or not should be considered.

Further, in the object displaying apparatus according to one embodiment of the present invention, the virtual object information may contain a display priority indicating a level of priority to display the virtual object, the superimposition inhibit object information may contain a superimposition inhibit level indicating a level of inhibition of superimposition of another object on the superimposition inhibit object, and when the superimposition inhibit level of the superimposition inhibit object is higher than the display priority of the virtual object, the virtual object display control means may control display of the virtual object so as not to hide the superimposition inhibit object by displaying the virtual object transparently.

In this case, a priority relation between the virtual object and the superimposition inhibit object in the display control is strictly determined based on the display priority and the superimposition inhibit level, and when the superimposition inhibit level is higher than the display priority, the virtual object is displayed in a transparent manner. It is thus possible to appropriately display the superimposition inhibit object to be displayed preferentially.

Further, in the object displaying apparatus according to one embodiment of the present invention, the virtual object information may contain a display priority indicating a level of priority to display the virtual object, the (superimposition inhibit object information may contain a superimposition inhibit level indicating a level of inhibition of superimposition of another object on the superimposition inhibit object, and when the superimposition inhibit level of the superimposition inhibit object is higher than the display priority of the virtual object, the virtual object display control means may control display of the virtual object so as not to hide the superimposition inhibit object by not displaying the virtual object.

In this case, a priority relation between the virtual object and the superimposition inhibit object in the display control is strictly determined based on the display priority and the superimposition inhibit level, and when the superimposition inhibit level is higher than the display priority, the virtual object is not displayed. It is thus possible to appropriately display the superimposition inhibit object to be displayed preferentially.

Further, in the object displaying apparatus according to one embodiment of the present invention, the virtual object information may contain a display priority indicating a level of priority to display the virtual object and a display position importance indicating a strength of a relevance of the virtual object to a layout position, the superimposition inhibit object information may contain a superimposition inhibit level indicating a level of inhibition of superimposition of another object on the superimposition inhibit object, and when the superimposition inhibit level of the superimposition inhibit object is higher than the display priority of the virtual object and the display position importance of the virtual object is higher than a pre-specified value, the virtual object display control means may control display of the virtual object so as not to hide the superimposition inhibit object by not displaying the virtual object.

When the display position importance of the virtual object is high, it means that a relevance of the virtual object to the layout position is high, and therefore when the virtual object is displayed in a position different from the specified layout position, the possibility that information provided by the virtual object to a user is inappropriate is high. In the configuration of this embodiment, because the virtual object is not displayed when the superimposition inhibit level of the superimposition inhibit object is higher than the display priority of the virtual object and the display position importance of the virtual object is high, it is possible to preferentially display the superimposition inhibit object and prevent the virtual object from being displayed in an appropriate position.

Further, in the object displaying apparatus according to one embodiment of the present invention, the virtual object information may contain a display priority indicating a level of priority to display the virtual obj ect and a display position importance indicating a strength of a relevance of the virtual object to a layout position, the superimposition inhibit object information may contain a superimposition inhibit level indicating a level of inhibition of superimposition of another object on the superimposition inhibit object, and when the superimposition inhibit level of the superimposition inhibit object is higher than the display priority of the virtual object and the display position importance of the virtual object is higher than a pre-specified value, the virtual object display control means may control display of the virtual object so as not to hide the superimposition inhibit object by displaying the virtual object transparently.

When the display position importance of the virtual object is high, it means that a relevance of the virtual object to the layout position is high, and therefore when the virtual object is displayed in a position different from the specified layout position, the possibility that information provided by the virtual object to a user is inappropriate is high. In the configuration of this embodiment, because the virtual object is displayed transparently when the superimposition inhibit level of the superimposition inhibit object is higher than the display priority of the virtual object and the display position importance of the virtual object is high, it is possible to preferentially display the superimposition inhibit object and further display the virtual object in an appropriate position.

Further, in the object displaying apparatus according to one embodiment of the present invention, when the display position importance of the virtual object is not higher than a pre-specified value, the virtual object display control means may control display of the virtual object so as not to hide the superimposition inhibit object by correcting a display position of the virtual object.

When the display position importance of the virtual object is not high, it means that a relevance of the virtual object to the layout position is low, and even when the virtual object is displayed in a position different from the specified layout position, the possibility that information provided by the virtual object to a user is inappropriate is low. In the configuration of this embodiment, because the display position of the virtual object is corrected when the superimposition inhibit level of the superimposition inhibit object is not high, it is possible to display both of the superimposition inhibit object and the virtual object even when any one of the superimposition inhibit level of the superimposition inhibit object and the display priority of the virtual object is higher.

Further, in the object displaying apparatus according to one embodiment of the present invention, when the superimposition inhibit level of the superimposition inhibit object is not higher than the display priority of the virtual object and the display position importance of the virtual object is higher than a pre-specified value, the virtual object display control means may display the virtual object in the layout position in the image of the real space. Because the virtual object should be displayed in preference to the superimposition inhibit object in this case, the virtual object is displayed superimposed on the superimposition inhibit object.

Further, in the object displaying apparatus according to one embodiment of the present invention, in a case where one virtual object overlaps another virtual object, when the display position importance of the one virtual object is higher than the display position importance of the another virtual object, the virtual object display control means may display the one virtual object in the layout position of the one virtual object in the image of the real space.

When the display position importance of the virtual object is high, it means that a relevance of the virtual object to the layout position is high, and therefore when the virtual object is displayed in a position different from the specified layout position, the possibility that information provided by the virtual object to a user is inappropriate is high. In the configuration of this embodiment, even when one object overlaps another object, if the display position importance of one object is high, one object is displayed at the sacrifice of display of another object. One object can be thereby displayed appropriately.

Further, in the object displaying apparatus according to one embodiment of the present invention, in a case where one virtual object overlaps another virtual object, when the display position importance of the one virtual object is not higher than the display position importance of the another virtual object, the virtual object display control means may control display of the one virtual object so as not to hide the another virtual object by correcting a display position of the one virtual object.

When the display position importance of the virtual object is not high, it means that a relevance of the virtual object to the layout position is low, and even when the virtual object is displayed in a position different from the specified layout position, the possibility that information provided by the virtual object to a user is inappropriate is low. In the configuration of this embodiment, when one object overlaps another object, the other object is displayed by correcting the display position of one object, and one object can be displayed appropriately.

Further, in the object displaying apparatus according to one embodiment of the present invention, the virtual object information may contain a display position importance indicating a strength of a relevance of the virtual object to a layout position, the superimposition inhibit object information may contain a superimposition inhibit level indicating a level of inhibition of superimposition of another object on the superimposition inhibit object, and when the superimposition inhibit level of the superimposition inhibit object is higher than the display position importance of the virtual object, the virtual object display control means controls display of the virtual object so as not to hide the superimposition inhibit object by correcting a display position of the virtual object, and when the superimposition inhibit level of the superimposition inhibit object is not higher than the display position importance of the virtual object, the virtual object display control means may control display of the virtual object so as not to hide the superimposition inhibit object by displaying the virtual object transparently or by not displaying the virtual object.

When the display position importance of the virtual object is high, it means that a relevance of the virtual object to the layout position is high, and therefore when the virtual object is displayed in a position different from the specified layout position, the possibility that information provided by the virtual object to a user is inappropriate is high. On the other hand, when the display position importance of the virtual object is not high, it means that a relevance of the virtual object to the layout position is low, and even when the virtual object is displayed in a position different from the specified layout position, the possibility that information provided by the virtual object to a user is inappropriate is low. In the configuration of this embodiment, when the superimposition inhibit level of the superimposition inhibit object is higher than the display position importance of the virtual object, the display position of the virtual object is corrected, and therefore the superimposition inhibit object is displayed appropriately without superimposition by another object and further the virtual object can be displayed. Further, when the superimposition inhibit level of the superimposition inhibit object is not higher than the display position importance of the virtual object, the virtual object is displayed in a transparent manner or not displayed, and therefore it is possible to preferentially display the superimposition inhibit object and prevent the virtual object from being displayed in an appropriate position.

### Advantageous Effects of Invention

It is possible to perform appropriate display control so that a virtual object is not superimposed on an object to be preferentially displayed in a real space image in the AR technology.

### Brief Description of Drawings

Fig. 1 is a diagram showing a device configuration of an object displaying system.
Fig. 2 is a block diagram showing a functional configuration of an object displaying apparatus.
Fig. 3 is a hardware block diagram of an object displaying apparatus.
Fig. 4 is a block diagram showing a functional configuration of a server.
Fig. 5 is a diagram showing a configuration of a virtual object information storage unit and an example of data stored therein.
Fig. 6 is a diagram showing a configuration of a superimposition inhibit object information storage unit and an example of data stored therein.
Fig. 7 is a timing chart showing a process of an object displaying method according to a first embodiment.
Fig. 8 is a diagram showing a display screen example of a display unit in an object displaying apparatus.
Fig. 9 is a flowchart showing a virtual object transparency determination process in Fig. 7.
Fig. 10 is a timing chart showing a process of an object displaying method according to a second embodiment.
Fig. 11 is a diagram showing a display screen example of a display unit in an object displaying apparatus according to the second embodiment.
Fig. 12 is a flowchart showing a virtual object display position adjustment process in Fig. 10.
Fig. 13 is a flowchart showing another example of a virtual object display position adjustment process in Fig. 10.
Fig. 14 is a timing chart showing a process of an object displaying method according to a third embodiment.
Fig. 15 is a diagram showing a display screen example of a display unit in an object displaying apparatus according to the third embodiment.
Fig. 16 is a flowchart showing a virtual object display position adjustment process in Fig. 14.

### Description of Embodiments

Embodiments of an object displaying apparatus, an object displaying system, and an object displaying method according to the present invention are described hereinafter with reference to the drawings. Note that, where possible, the same elements are denoted by the same reference numerals and redundant description thereof is omitted.

### (First embodiment)

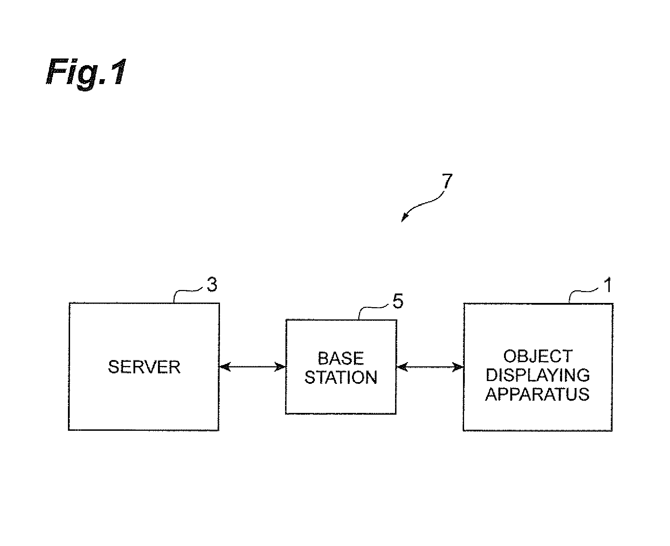

Fig. 1 is a block diagram showing a device configuration of an object displaying system 7 according to a first embodiment. As shown in Fig. 1, the object displaying system 7 includes an object displaying apparatus 1 and a server 3 that can communicate with the object displaying apparatus 1. The object displaying apparatus 1 is a mobile terminal that can perform communication through a mobile communication network, for example. Thus, the object displaying apparatus 1 communicates with the server through a base station 5, which is a mobile communication network.

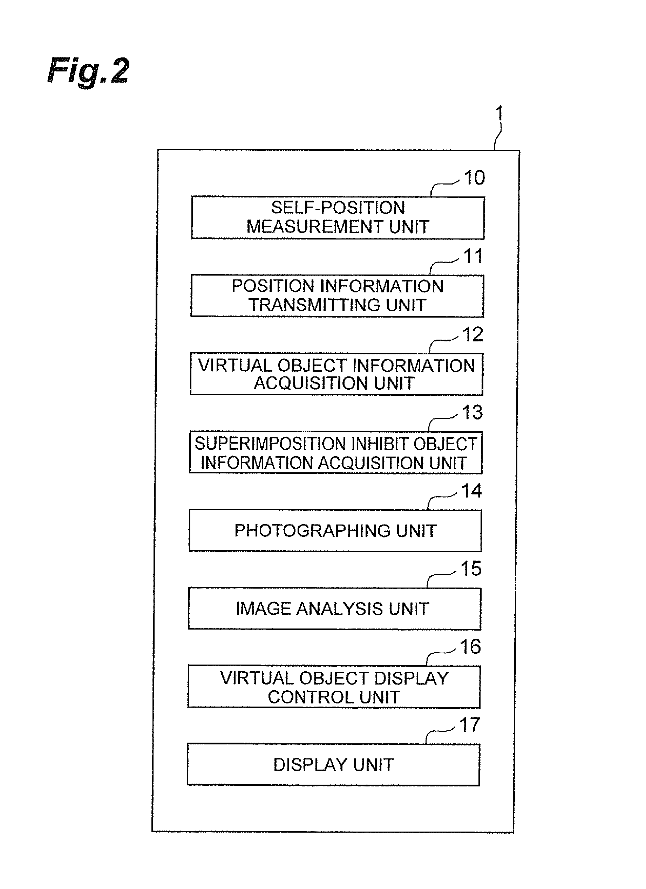

Fig. 2 is a block diagram showing a functional configuration of the object displaying apparatus 1 according to the first embodiment. The object displaying apparatus 1 according to this embodiment is a device that controls display of an object placed in the real space or the virtual space, for example, and has a function of acquiring an object placed in the vicinity of the located position of the object displaying apparatus 1 in the real space or the virtual space from the server and displaying an object including various information and images superimposed on an image in the real space acquired by a camera included in the object displaying apparatus 1. In order to accurately control the display position of an object on a display means such as a display of the object displaying apparatus 1, it is necessary to accurately detect the located position of the object displaying apparatus 1 in this embodiment.

As shown in Fig. 2, the object displaying apparatus 1 includes, as functional components, a self-position measurement unit 10 (self-position measurement means), a position information transmitting unit 11 (position information transmitting means), a virtual object information acquisition unit 12 (virtual object information acquisition means), a superimposition inhibit object information acquisition unit 13 (superimposition inhibit object information acquisition means), a photographing unit 14 (photographing means), an image analysis unit 15 (image analysis means), a virtual object display control unit 16 (virtual object display control means), and a display unit 17.

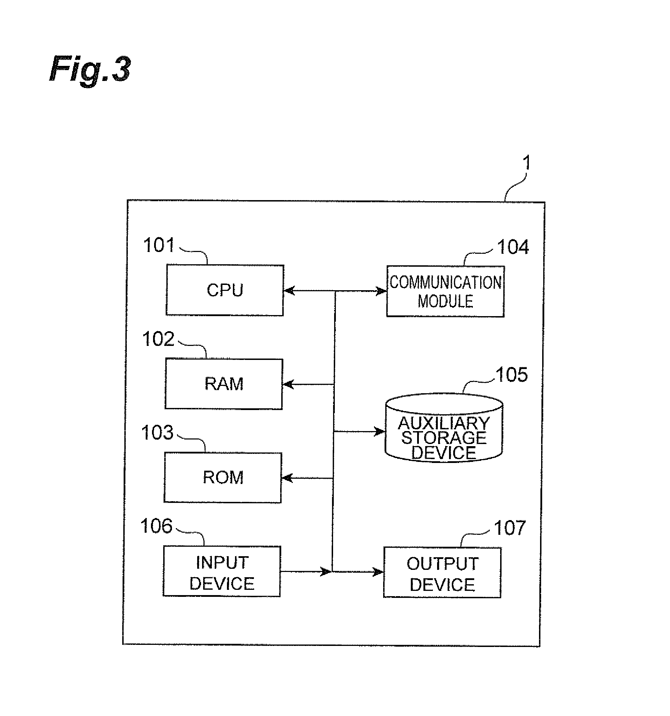

Fig. 3 is a hardware block diagram of the object displaying apparatus 1. As shown in Fig. 3, the object displaying apparatus 1 is physically configured as a computer system that includes a CPU 101, a RAM 102 and a ROM 103 which are a main storage device, a communication module 104 which is a data transmitting and receiving device, an auxiliary storage device 105 such as a hard disk or flash memory, an input device 106 such as a keyboard, an output device 107 such as a display and the like. The functions shown in Fig. 2 are implemented by loading given computer software onto hardware such as the CPU 101 or the RAM 102 shown in Fig. 3, making the communication module 104, the input device 106 and the output device 107 operate under control of the CPU 101, and performing reading and writing of data in the RAM 102 or the auxiliary storage device 105. The respective functional units of the object displaying apparatus 1 are described hereinafter in detail with reference back to Fig. 2.

The self-position measurement unit 10 is a part that measures the located position of the object displaying apparatus 1 and it may be a GPS device, for example. The self-position measurement unit 10 sends information about the measured located position to the position information transmitting unit 11.

The position information transmitting unit 11 is a part that transmits the information about the located position as position information to the server 3.

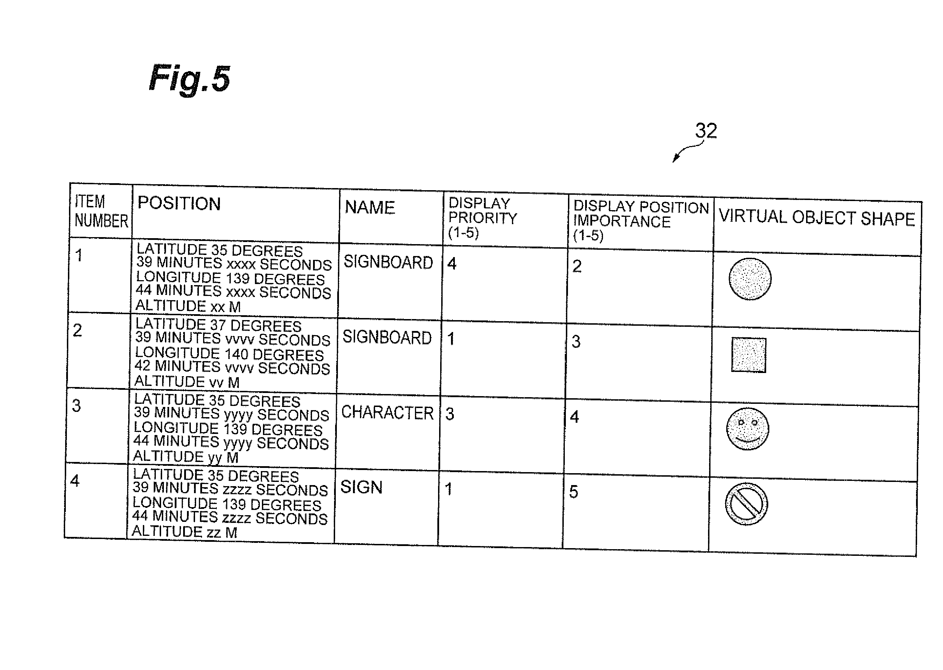

The virtual object information acquisition unit 12 is a part that acquires virtual object information from the server 3. The virtual object information is information about a virtual object, which is a virtual object placed in the real space, and it contains information about the layout position of a virtual object. Further, the virtual object information contains a display priority indicating the level of priority to display the virtual object. Note that the contents of the virtual object information are described in detail later with reference to Fig. 5.

The virtual object is a virtual object that is displayed superimposed on an image of the real space in the object displaying apparatus 1 to provide various information to a user of the object displaying apparatus 1. Note that the virtual object information is extracted based on the position information in the server 3. A process of extracting the virtual object information based on the position information is described later. The virtual object information acquisition unit 12 sends the acquired virtual object information to the virtual object display control unit 16.

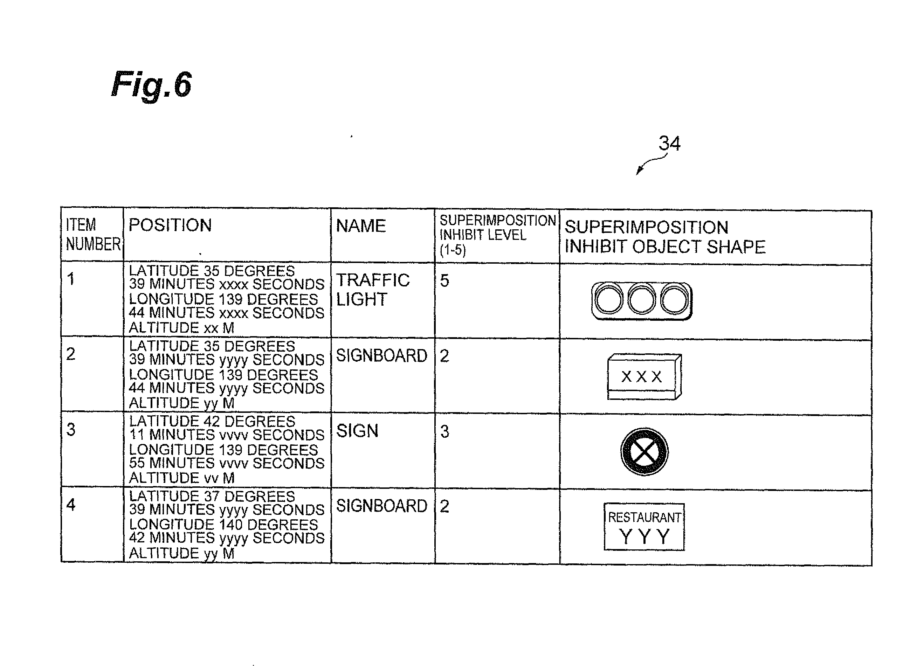

The superimposition inhibit object information acquisition unit 13 is a part that acquires superimposition inhibit object information from the server 3. The superimposition inhibit object information is information related to a superimposition inhibit object that is an object which exists in the real space and on which superimposed display of a virtual object is inhibited. Further, the superimposition inhibit object information contains a superimposition inhibit level indicating the level of inhibition of superimposition of another object on the superimposition inhibit object. The contents of the superimposition inhibit object information are described in detail later with reference to Fig. 6. The superimposition inhibit object information acquired thereby is extracted based on the position information in the server 3. The inhibit object information acquisition unit 13 sends the acquired superimposition inhibit object information to the image analysis unit 15.

The photographing unit 14 is a part that takes an image of the real space and it may be a camera, for example. The photographing unit 14 sends the image of the real space to the image analysis unit 15 and the display unit 17.

The image analysis unit 15 is a part that extracts a superimposition inhibit object from the image of the real space photographed by the photographing unit 14 based on the superimposition inhibit object information received by the superimposition inhibit object information acquisition unit 13.

The virtual object display control unit 16 is a part that, when there is a virtual object that overlaps the superimposition inhibit object extracted by the image analysis unit 15 in the case of placing virtual objects in the image of the real space based on the virtual object information acquired by the virtual object information acquisition unit 12, controls display of the virtual object so as not to hide the superimposition inhibit object.

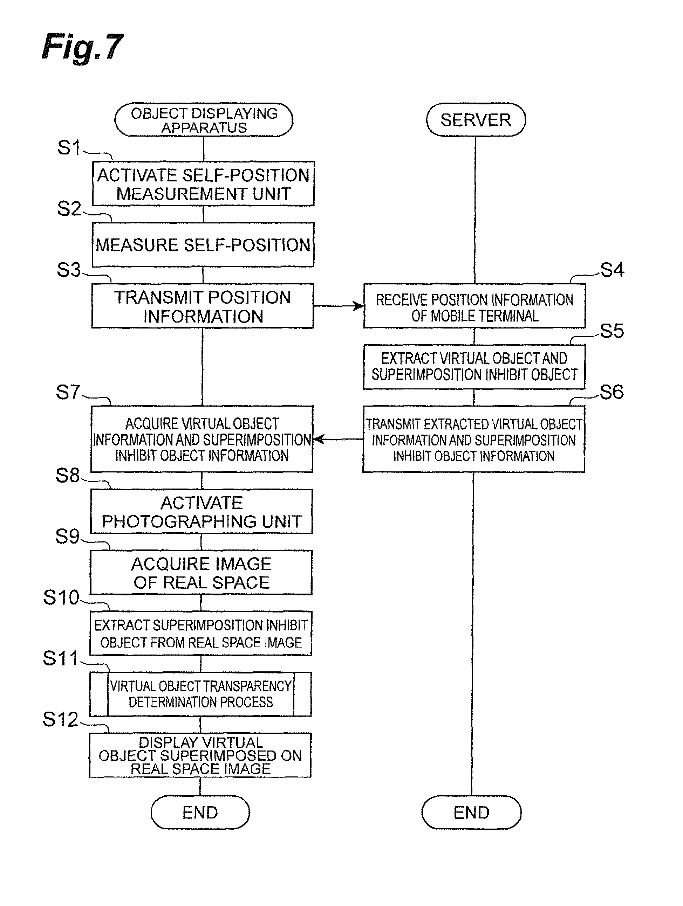

Specifically, when the superimposition inhibit level of the superimposition inhibit object is higher than the display priority of the virtual object, the virtual object display control unit 16 controls display of the virtual object so as not to hide the superimposition inhibit object by displaying the virtual object transparently. The display control process is described in detail later with reference to Figs. 7 to 9.

The display unit 17 is a part that displays a virtual object superimposed on an image of the real space on the basis of display control by the virtual object display control unit 16, and it may be a display device, for example.

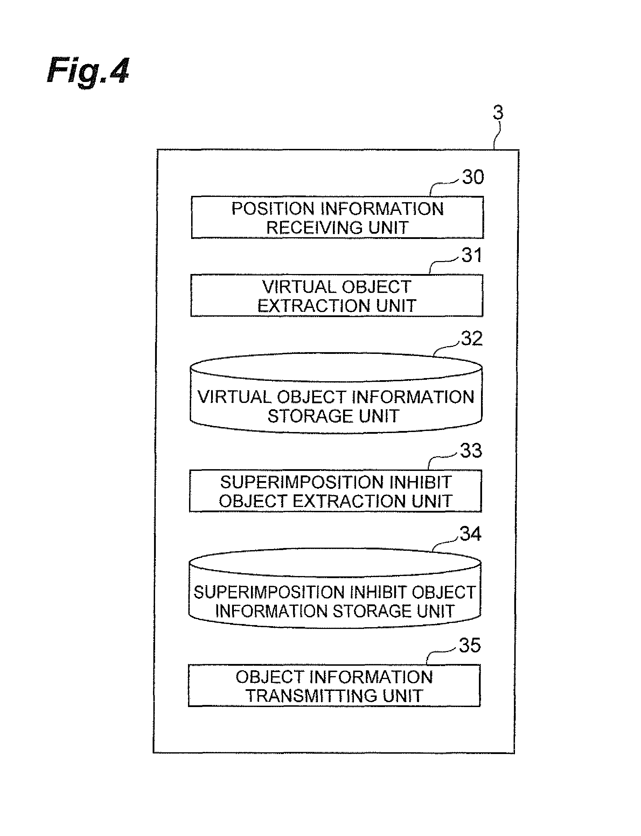

The functions of the server 3 are described in detail hereinafter. Fig. 4 is a block diagram showing a functional configuration of the server 3. The server 3 according to this embodiment includes a position information receiving unit 30 (position information receiving means), a virtual object extraction unit 31 (virtual object extraction means), a virtual object information storage unit 32 (virtual object information storage means), a superimposition inhibit object extraction unit 33 (superimposition inhibit object extraction means), a superimposition inhibit object information storage unit 34 (superimposition inhibit object information storage means), and an object information transmitting unit 35 (object information transmitting means). Further, the server 3 is also a computer having a hardware configuration similar to the hardware configuration of the object displaying apparatus 1 shown in Fig. 3. The respective functional units of the server 3 are described in detail with reference to Fig. 4.

The position information receiving unit 30 is a part that receives position information from the object displaying apparatus. The position information receiving unit 30 sends the received position information to the virtual object extraction unit 31 and the superimposition inhibit object extraction unit 33.

The virtual object extraction unit 31 is a part that extracts virtual object information from the virtual object information storage unit 32. The virtual object extraction unit 31 extracts virtual object information of a virtual object located within a pre-specified distance from a position indicated by the position information received by the position information receiving unit 30, for example.

The virtual object information storage unit 32 is a part that stores virtual object information. Fig. 5 is a diagram showing a configuration of the virtual object information storage unit 32 and an example of data stored therein. As shown in Fig. 5, the virtual object information storage unit 32 stores, as virtual object information, a position, name, display priority, display position importance and virtual object shape in association with each item number.

The "position" in virtual object information is information indicating the layout position of a virtual object in the real space, and it contains latitude, longitude and altitude. The "name" is the name of the virtual object.

The "display priority" in virtual object information is information indicating the level of priority to display the virtual object, and it is indicated by any of five levels, 1 to 5, in the example of Fig. 5. For example, when the virtual object is information indicating emergency information, the level of the display priority is set high.

The "display position importance" in virtual object information is information indicating the strength of a relevance of the virtual object to the layout position, and it is indicated by any of five levels, 1 to 5, in the example of Fig. 5. For example, when the virtual object information indicates information related to a shop existing in the real space, the level of the display position importance of the virtual object is set high. Further, when the virtual object information indicates information related to an entire surrounding area of the layout position, the level of the display position importance of the virtual object is set low.

The "virtual object shape" in virtual object information indicates information related to the two-dimensional or three-dimensional shape of the virtual object. Note that, in the first embodiment, the virtual object information storage unit 32 may not have information of the display position importance. The display position importance is information used also in second and third embodiments described later.

The superimposition inhibit object extraction unit 33 is a part that extracts superimposition inhibit object information from the superimposition inhibit object information storage unit 34. The superimposition inhibit object extraction unit 33 extracts superimposition inhibit object information of a superimposition inhibit object located within a pre-specified distance from a position indicated by the position information received by the position information receiving unit 30, for example.

The superimposition inhibit object information storage unit 34 is a part that stores superimposition inhibit object information. Fig. 6 is a diagram showing a configuration of the superimposition inhibit object information storage unit 34 and an example of data stored therein. As shown in Fig. 6, the superimposition inhibit object information storage unit 34 stores, as superimposition inhibit object information, a position, name, superimposition inhibit level, and superimposition inhibit object shape in association with each item number.

The "position" in superimposition inhibit object information is information indicating the located position of a superimposition inhibit object in the real space, and it contains latitude, longitude and altitude. The "name" is the name of the superimposition inhibit object.

The "superimposition inhibit level" in superimposition inhibit object information is information indicating the level of inhibition of superimposition of another object on the superimposition inhibit object, and it is indicated by any of five levels, 1 to 5, in the example of Fig. 6. For example, because user's safety is risked if a traffic light is hidden by a virtual object or the like in an image of the real space, the traffic light is an superimposition inhibit object whose superimposition inhibit level should be set high.

The "superimposition inhibit object shape" in superimposition inhibit object information indicates information related to the two-dimensional or three-dimensional shape of the superimposition inhibit object.

The object information transmitting unit 35 is a part that transmits the virtual object information extracted by the virtual object extraction unit 31 and the superimposition inhibit object information extracted by the superimposition inhibit object extraction unit 33 to the object displaying apparatus 1.

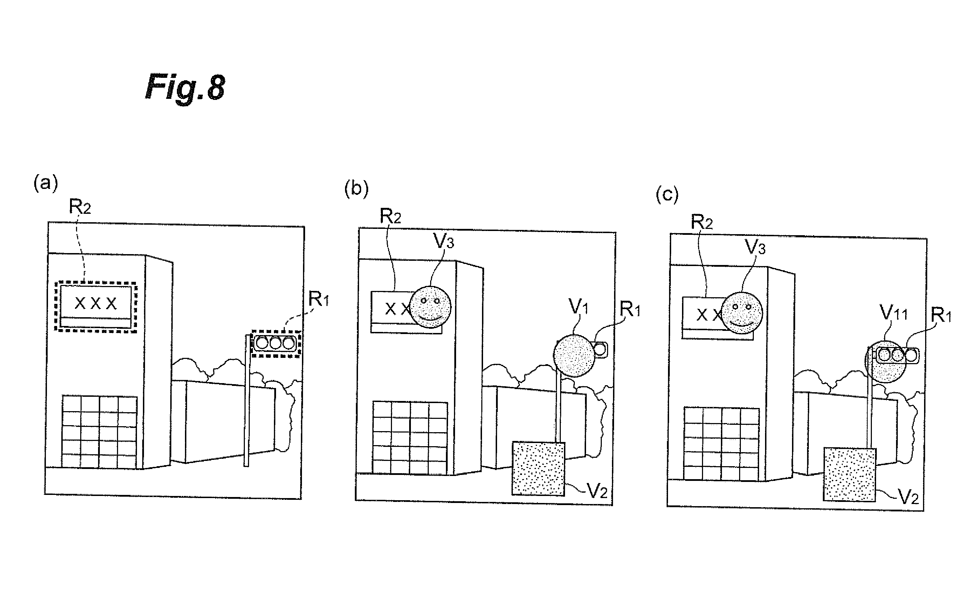

The operation of the object displaying system 7 in an object displaying method according to this embodiment is described hereinafter with reference to Figs. 7 and 8. Fig. 7 is a timing chart showing a process performed in the object displaying system 7. Fig. 8 is a diagram showing an example of a display screen in the display unit 17 of the object displaying apparatus 1.

First, the object displaying apparatus 1 activates the self-position measurement unit 10 (S1). Next, the self-position measurement unit 10 measures the position where the object displaying apparatus 1 is located (S2). Then, the position information transmitting unit 11 transmits information related to the located position of the object displaying apparatus 1 as position information to the server 3 (S3).

When the position information is transmitted from the object displaying apparatus 1, the position information receiving unit 30 of the server 3 receives the position information (S4). Next, the virtual object extraction unit 31 extracts virtual object information of a virtual object that is located within a pre-specified distance from a position indicated by the position information from the virtual object information storage unit 32 (S5). Further, the superimposition inhibit object extraction unit 33 extracts superimposition inhibit object information of a superimposition inhibit object that is located within a pre-specified distance from a position indicated by the position information from the superimposition inhibit object information storage unit 34 (S5).

Then, the object information transmitting unit 35 transmits the virtual object information extracted by the virtual object extraction unit 31 and the superimposition inhibit object information extracted by the superimposition inhibit object extraction unit 33 to the object displaying apparatus 1 (S6).

Then, the virtual object information acquisition unit 12 and the superimposition inhibit object information acquisition unit 13 acquire the virtual object information and the superimposition inhibit object information, respectively, from the server 3 (S7, virtual object information acquisition step and superimposition inhibit object information acquisition step).

Next, the object displaying apparatus 1 activates the photographing unit 14 (S8). Note that, although the photographing unit 14 is activated in Step S8 in this embodiment, it may be activated at the point of time when the process of the object displaying method shown in the flowchart of Fig. 7 is started or at some point before the process is started.

Then, the photographing unit 14 takes an image of the real space and sends the photographed image to the image analysis unit 15 and the display unit 17 (S9, photographing step).

After that, the image analysis unit 15 extracts a superimposition inhibit object from the image of the real space photographed by the photographing unit 14 based on the superimposition inhibit object information acquired by the superimposition inhibit object information acquisition unit 13 (S10, image analysis step). The extraction of an object from an image of the real space is performed by a known image analysis technique such as pattern matching, for example, based on information of the superimposition inhibit object shape contained in the superimposition inhibit object information. Fig. 8(a) is a diagram showing a process of extracting an object from an image of the real space. As shown in Fig. 8(a), the image analysis unit 15 extracts superimposition inhibit objects R₁ and R₂ from the image of the real space. The superimposition inhibit object R₁ is the object extracted based on the superimposition inhibit object information with the item number 1 among the superimposition inhibit object information shown in Fig. 6. Further, superimposition inhibit object R₂ is the object extracted based on the superimposition inhibit object information with the item number 2 among the superimposition inhibit object information shown in Fig. 6.

Then, when, in the case where virtual objects are placed in the image of the real space based on the virtual object information acquired by the virtual object information acquisition unit 12, there is a virtual object that overlaps the superimposition inhibit object extracted by the image analysis unit 15, the virtual object display control unit 16 controls display of the virtual object so as not to hide the superimposition inhibit object. In this embodiment, the virtual object display control unit 16 performs a transparency determination process on the virtual object (S11, virtual object display control step).

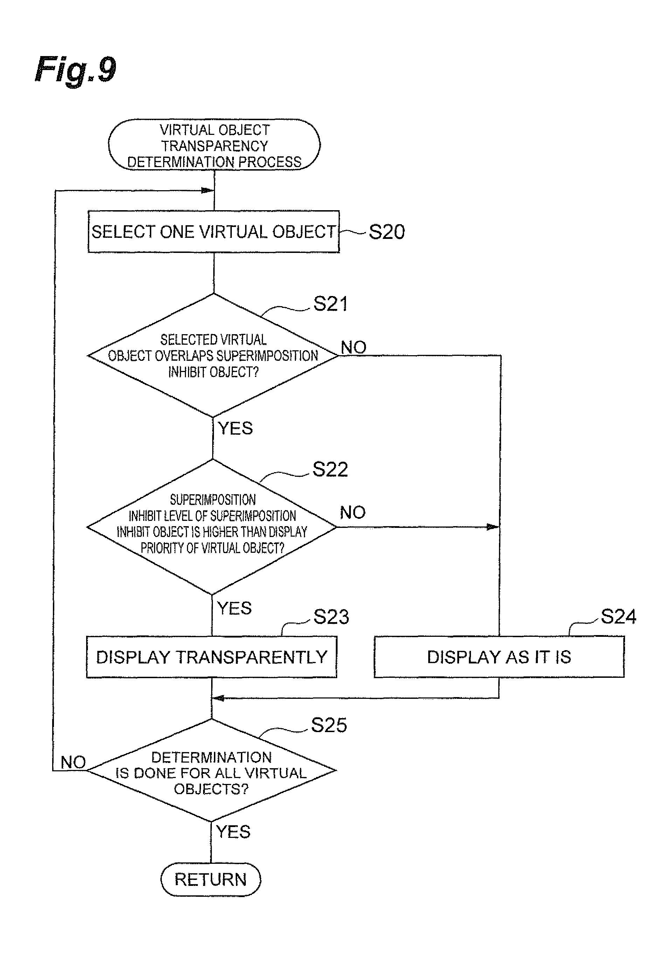

Fig. 9 is a flowchart showing the details of the virtual object transparency determination process. First, the virtual object display control unit 16 selects one virtual object from virtual object information acquired by the virtual object information acquisition unit 12 (S20).

Next, the virtual object display control unit 16 determines whether, when the one virtual object is placed in an image of the real space according to information of the layout position indicated by the virtual object information, it overlaps the superimposition inhibit object extracted by the image analysis unit 15 (S21). When it is determined that the one virtual object overlaps the superimposition inhibit object, the process proceeds to Step S22. On the other hand, when it is not determined that the one virtual object overlaps the superimposition inhibit object, the process proceeds to Step S24.

Fig .8(b) is an example of placing virtual objects with the item numbers 1, 2 and 3 among the virtual objects shown in Fig. 5 in an image of the real space. As shown in Fig. 8(b), a virtual object V₁ has an overlap with the superimposition inhibit object R₁. Further, a virtual object V₂ does not have an overlap with any superimposition inhibit object. Further, a virtual object V₃ has an overlap with the superimposition inhibit object R₂. Thus, in the transparency determination process for the virtual objects V₁ and V₃, the process proceeds to Step S22. On the other hand, in the transparency determination process for the virtual objects V₂, the process proceeds to Step S24.

In Step S22, the virtual object display control unit 16 determines whether the superimposition inhibit level of the superimposition inhibit object having an overlap with the virtual object is higher than the display priority of the one virtual object (S22). When it is determined that the superimposition inhibit level is higher than the display priority, the process proceeds to Step S23. On the other hand, when it is not determined that the superimposition inhibit level is higher than the display priority, the process proceeds to Step S24. For example, in the transparency determination process for the virtual object V₁ in Fig. 8(b), because the superimposition inhibit level "5" of the superimposition inhibit object R₁ is higher than the display priority "4" of the virtual object V₁, the process proceeds to Step S23. On the other hand, in the transparency determination process for the virtual object V₃, because the superimposition inhibit level "2" of the superimposition inhibit object R₂ is not higher than the display priority "3" of the virtual object V₃, the process proceeds to Step S24.

In Step S23, the virtual object display control unit 16 performs display control so as not to hide the superimposition inhibit object by displaying the virtual object transparently (S23). Fig. 8(c) is a diagram showing a display example of the virtual object after display control by the virtual object display control unit 16. The virtual object V₁ in Fig. 8(b) is displayed transparently like a virtual object V₁₁ shown in Fig. 8(c). The superimposition inhibit object R₁ is thereby displayed without being hidden. Note that the transmittance when displaying the virtual object V₁ in a transparent manner may be changed based on a difference between the display priority of the virtual object V₁ and the superimposition inhibit level of the superimposition inhibit object R₁.

Note that, although display control is performed so as not to hide the superimposition inhibit object by displaying the virtual object transparently in Step S23 in this embodiment, display control may be performed so as not to hide the superimposition inhibit object by not displaying the virtual object.

On the other hand, in Step S24, the virtual object display control unit 16 displays the virtual object as it is. The virtual object V₂ and the virtual object V₃ are displayed as they are as shown in Fig. 8(c).

After that, the virtual object display control unit 16 determines whether the virtual object transparency determination process is done for all virtual objects acquired in Step S7 (S25). The processing of Steps S20 to S25 is repeated until the virtual object transparency determination process is done for all virtual objects.

Referring back to Fig. 7, the display unit 17 displays the virtual object superimposed on the image of the real space based on the display control by the virtual object display control unit 16 (S12, display step, see Fig. 8(c)). The process of this embodiment thereby ends.

Note that, although the object displaying apparatus 1 acquires superimposition inhibit object information from the server 3 in the object displaying process according to this embodiment, it is not limited thereto. For example, information about an superimposition inhibit object that does not depend on a particular area, such as a traffic light, may be stored in advance in the object displaying apparatus 1.

Further, an upper limit may be placed on the number of virtual objects to be displayed on the display unit 17 temporarily in order to prevent complicated display of virtual objects on the display unit 17. In this case, a specified number of virtual objects are displayed in descending order of the display priority of a virtual object. Further, an upper limit may be placed on a display area of virtual objects on the display unit 17, and the virtual objects may be displayed in descending order of the display priority so as not to exceed the upper limit.

Further, the virtual object display control unit 16 may calculate the distance from the object displaying apparatus 1 to a virtual object and preferentially control the display of the virtual object that is placed at the closest distance from the object displaying apparatus 1.

In the object displaying apparatus 1, the object displaying system and the object displaying method according to the first embodiment described above, when, in the case where a virtual object is displayed superimposed on an image of the real space according to information about the layout position of the virtual object, the virtual object is displayed overlapping a superimposition inhibit object, display control by the virtual object display control unit 16 is performed so that the superimposition inhibit object is not hidden by the virtual object. It is thereby possible to preferentially display the superimposition inhibit object.

### (Second embodiment)

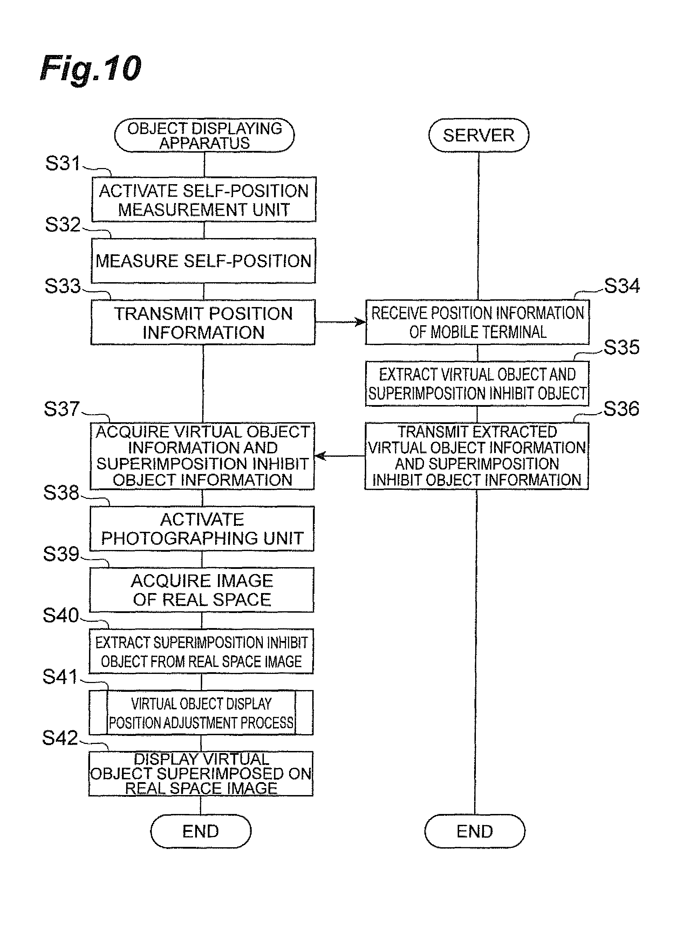

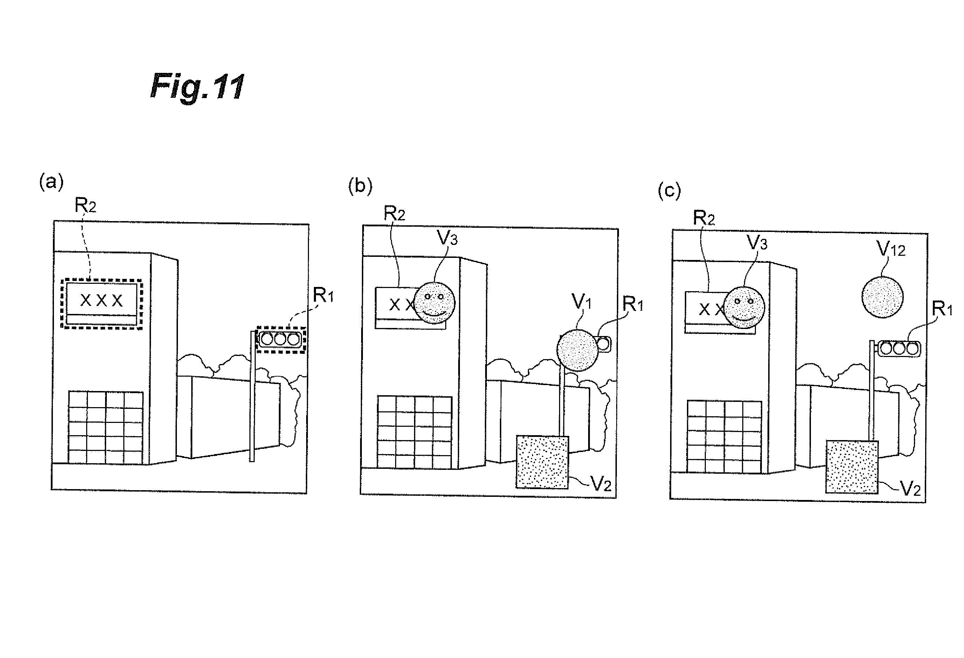

A process of an object display method in the object displaying apparatus 1 according to a second embodiment is described hereinafter with reference to Figs. 10 to 13. Fig. 10 is a timing chart showing a process performed in the object displaying system 7. Fig. 11 is a diagram showing an example of a display screen in the display unit 17 of the object displaying apparatus 1. Note that the functional configurations of the object displaying apparatus 1 and the server 3 are the same as those described in the first embodiment (Figs. 1 and 3).

The processing of Steps S31 to S39 in Fig. 10 is the same as the processing of Steps S1 to S9 in the first embodiment (Fig. 7), respectively.

Then, the image analysis unit 15 extracts a superimposition inhibit object from the image of the real space photographed by the photographing unit 14 based on the superimposition inhibit object information acquired by the superimposition inhibit object information acquisition unit 13 (S40). Fig. 11(a) is an example of extraction of an object from the image of the real space. As shown in Fig. 11(a), the image analysis unit 15 extracts superimposition inhibit objects R₁ and R₂ from the image of the real space. The superimposition inhibit object R₁ is the object extracted based on the superimposition inhibit object information with the item number 1 among the superimposition inhibit object information shown in Fig. 6. The superimposition inhibit object R₂ is the object extracted based on the superimposition inhibit object information with the item number 2 among the superimposition inhibit object information shown in Fig. 6.

Then, when, in the case where virtual objects are placed in the image of the real space based on the virtual object information acquired by the virtual object information acquisition unit 12, there is a virtual object that overlaps the superimposition inhibit object extracted by the image analysis unit 15, the virtual object display control unit 16 controls display of the virtual object so as not to hide the superimposition inhibit object. In this embodiment, the virtual object display control unit 16 performs a display position adjustment process on the virtual object (S41, virtual object display control step).

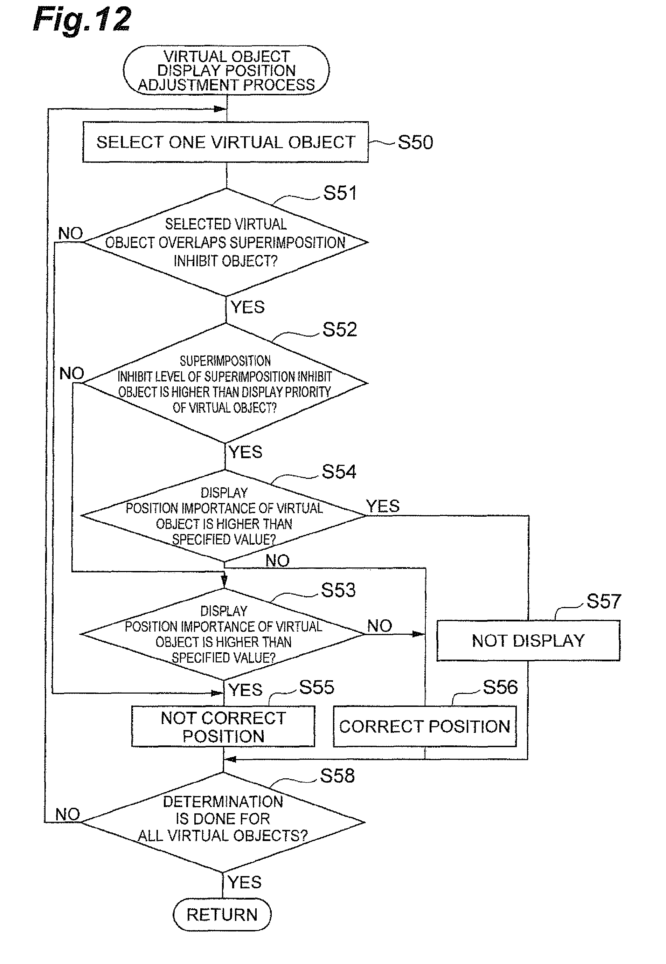

Fig. 12 is a flowchart showing the details of the virtual object display position adjustment process. First, the virtual object display control unit 16 selects one virtual object from virtual object information acquired by the virtual object information acquisition unit 12 (S50).

Next, the virtual object display control unit 16 determines whether, when the one virtual object is placed in an image of the real space according to information of the layout position contained in the virtual object information, it overlaps the superimposition inhibit object extracted by the image analysis unit 15 (S51). When it is determined that the one virtual object overlaps the superimposition inhibit object, the process proceeds to Step S52. On the other hand, when it is not determined that the one virtual object overlaps the superimposition inhibit object, the process proceeds to Step S55.

Fig .11(b) is an example of placing virtual objects with the item numbers 1, 2 and 3 among the virtual objects shown in Fig. 5 in an image of the real space. As shown in Fig. 11(b), a virtual object V₁ has an overlap with the superimposition inhibit object R₁. Further, a virtual object V₂ does not have an overlap with any superimposition inhibit object. Further, a virtual object V₃ has an overlap with the superimposition inhibit object R₂. Thus, in the display position adjustment process for the virtual objects V₁ and V₃, the process proceeds to Step S52. On the other hand, in the display position adjustment process for the virtual objects V₂, the process proceeds to Step S55.

In Step S52, the virtual object display control unit 16 determines whether the superimposition inhibit level of the superimposition inhibit object having an overlap with the virtual object is higher than the display priority of the one virtual object (S52). When it is determined that the superimposition inhibit level is higher than the display priority, the process proceeds to Step S54. On the other hand, when it is not determined that the superimposition inhibit level is higher than the display priority, the process proceeds to Step S53. For example, in the display position adjustment process for the virtual object V₁ in Fig. 11(b), because the superimposition inhibit level "5" of the superimposition inhibit object R₁ is higher than the display priority "4" of the virtual object V₁, the process proceeds to Step S54. On the other hand, in the display position adjustment process for the virtual object V₃, because the superimposition inhibit level "2" of the superimposition inhibit object R₂ is not higher than the display priority "3" of the virtual object V₃, the process proceeds to Step S53.

In Step S53, the virtual object display control unit 16 determines whether the display position importance (see Fig. 5) of the virtual object is higher than a pre-specified value (S53). When it is determined that the display position importance is higher than the specified value, the process proceeds to Step S55. On the other hand, when it is not determined that the display position importance is higher than the specified value, the process proceeds to Step S56. In the example of Fig. 11(b), if the specified value for the determination of the display position importance is 3, because the display position importance of the virtual object V₃ is "4", the process proceeds to Step S55.

On the other hand, in Step S54, the virtual object display control unit 16 determines whether the display position importance (see Fig. 5) of the virtual object is higher than a pre-specified value (S53). When it is determined that the display position importance is higher than the specified value, the process proceeds to Step S57. On the other hand, when it is not determined that the display position importance is higher than the specified value, the process proceeds to Step S56. In the example of Fig. 11(b), if the specified value for the determination of the display position importance is 3, because the display position importance of the virtual object V₁ is "2", the process proceeds to Step S56.

In Step S55, the virtual object display control unit 16 performs display control so that the virtual object is displayed as it is in the layout position of the virtual object indicated by the virtual object information, without making corrections of the display position (S55). Even though the virtual object has an overlap with the superimposition inhibit object, because the display priority of the virtual object is higher than the superimposition inhibit level of the superimposition inhibit object, the virtual object should be displayed preferentially. Further, the high level of the display position importance indicates that the virtual object has a strong relevance to the layout position. Therefore, when the virtual object is displayed in a position different from the specified layout position, there is a high possibility that information provided by the virtual object to a user is inappropriate. Therefore, the virtual object is displayed without any correction of the display position. In the example of Fig. 11(c), the virtual object V₃ is displayed in the position overlapping the superimposition inhibit object R₂ with no correction of the position.

In Step S56, the virtual object display control unit 16 controls display of the virtual object so as not to hide the superimposition inhibit object by correcting the display position of the virtual object (S56). When the display position importance of the virtual object is not high (S53, S54), it means that a relevance of the virtual object to the layout position is low, and even when the virtual object is displayed in a position different from the specified layout position, the possibility that information provided by the virtual object to a user is inappropriate is low. In this embodiment, because the display position of the virtual object is corrected when the superimposition inhibit level of the superimposition inhibit object is not higher than the display priority of the virtual object (No in S52) and the display position importance of the virtual object is not high (No in S53), it is possible to display the virtual object that should be displayed preferentially and also display the superimposition inhibit object whose level of preferential display is not high.

Further, because the display position of the virtual object is corrected when the superimposition inhibit level of the superimposition inhibit abject is higher than the display priority of the virtual object (Yes in S52) and the display position importance of the virtual object is not high (No in S54), it is possible to display the virtual object that should be displayed preferentially and also display the superimposition inhibit object whose level of preferential display is not high.

The virtual object V₁ in Fig. 11(b) is corrected in position so that it does not overlap the superimposition inhibit object R₁ as shown by a virtual object V₁₂ in Fig. 11 (c).

In Step S57, the virtual object display control unit 16 controls display of the virtual object so as not to hide the superimposition inhibit object by not displaying the virtual object (S57). When the display position importance of the virtual object is high, it means that a relevance of the virtual object to the layout position is high, and therefore when the virtual object is displayed in a position different from the specified layout position, the possibility that information provided by the virtual object to a user is inappropriate is high. In this embodiment, because the virtual object is not displayed when the superimposition inhibit level of the superimposition inhibit object is higher than the display priority of the virtual object and the display position importance of the virtual object is high, it is possible to preferentially display the superimposition inhibit object and prevent the virtual object from being displayed in an appropriate position.

Note that, although the virtual object display control unit 16 controls display of the virtual object so as not to hide the superimposition inhibit object by not displaying the virtual object in Step S57 in this embodiment, the virtual object display control unit 16 may control display of the virtual object so as not to hide the superimposition inhibit object by displaying the virtual object in a transparent manner.

After that, the virtual object display control unit 16 determines whether the virtual object display position adjustment process is done for all virtual objects acquired in Step S37 (S58). The processing of Steps S50 to S58 is repeated until the virtual object display position adjustment process is done for all virtual objects.

Referring back to Fig. 10, the display unit 17 displays the virtual object superimposed on the image of the real space based on the display control by the virtual object display control unit 16 (S42, see Fig. 11(c)). The process of this embodiment thereby ends.

In the flowchart of Fig. 12, after comparing the superimposition inhibit level of the superimposition inhibit object with the level of the display priority of the virtual object, the determination on the level of the display position importance of the virtual object is made, and the virtual object is not displayed, displayed after position correction, or displayed as it is without position correction according to a result of the determination. However, as another configuration, a comparison may be made between the superimposition inhibit level of the superimposition inhibit object and the level of the display position importance of the virtual object, and the way of displaying the virtual object may be decided according to a result of the determination.

In the above configuration, when the superimposition inhibit level of the superimposition inhibit object is higher than the display position importance of the virtual object, the virtual object display control unit 16 controls display of the virtual object so as not to hide the superimposition inhibit object by correcting the display position of the virtual object. On the other hand, when the superimposition inhibit level of the superimposition inhibit object is lower than the display position importance of the virtual object, the virtual object display control unit 16 controls display of the virtual object so as not to hide the superimposition inhibit object by displaying the virtual object transparently or not displaying the virtual object.

Further, although the superimposition inhibit level of the superimposition inhibit object and the display position importance of the virtual object are both a parameter of any of 1 to 5 (see Figs. 5 and 6) in this embodiment, they may be a binary parameter of either 1 or 0. In this configuration, when the superimposition inhibit level is 1 and the display position importance is 1, the virtual object display control unit 16 controls display of the virtual ob*ject so as not to hide the superimposition inhibit object by displaying the virtual object transparently or not displaying the virtual object. Further, when the superimposition inhibit level is 1 and the display position importance is 0, the virtual object display control unit 16 controls display of the virtual object so as not to hide the superimposition inhibit object by correcting the display position of the virtual object.

Further, when the superimposition inhibit level is 0 and the display position importance is 1, the virtual object display control unit 16 performs display control so that the virtual object is displayed as it is in the layout position of the virtual object indicated by the virtual object information, without making corrections of the display position. Furthermore, when the superimposition inhibit level is 0 and the display position importance is 0, the virtual object display control unit 16 controls display of the virtual object so as not to hide the superimposition inhibit object by correcting the display position of the virtual object.

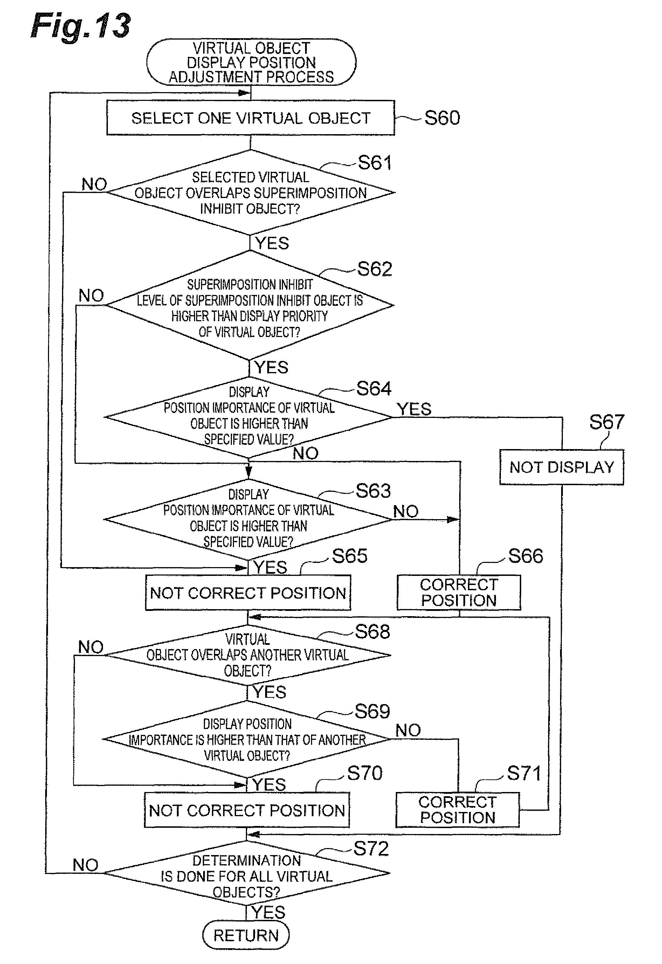

Another example of the virtual object display position adjustment process (S41) is described hereinafter with reference to Fig. 13. Fig. 13 is a flowchart showing the details of another example of the virtual object display position adjustment process.

The processing of Steps S60 to S67 is the same as the processing of Steps S50 to S57 in Fig. 12, respectively. In the following Step S68, the virtual object display control unit 16 determines whether one virtual object overlaps another virtual object (S68). When it is determined that one virtual object overlaps another virtual object, the process proceeds to Step S69. On the other hand, when it is not determined that one virtual object overlaps another virtual object, the process proceeds to Step S70.

In Step S69, the virtual object display control unit 16 determines whether the display position importance of one virtual object is higher than the display position importance of another virtual object (S69). When it is determined that the display position importance of one virtual object is higher than the display position importance of another virtual object, the process proceeds to Step S70. On the other hand, when it is not determined that the display position importance of one virtual object is higher than the display position importance of another virtual object, the process proceeds to Step S71.

In Step S70, the virtual object display control unit 16 displays the one virtual object in the layout position of the one virtual object in the image of the real space. When the display position importance of the virtual object is high, it means that a relevance of the virtual object to the layout position is high, and therefore when the virtual object is displayed in a position different from the specified layout position, the possibility that information provided by the virtual object to a user is inappropriate is high. In this embodiment, even when one object overlaps another object, if the display position importance of one object is high, one object is displayed at the sacrifice of display of another object. One object can be thereby displayed in an appropriate position.

In Step S71, the virtual object display control unit 16 controls display of the one virtual object so that the other virtual object is not hidden by correcting the display position of the one virtual object (S71). When the display position importance of the virtual object is not high, it means that a relevance of the virtual object to the layout position is low, and even when the virtual object is displayed in a position different from the specified layout position, the possibility that information provided by the virtual object to a user is inappropriate is low. In this embodiment, when one object overlaps another object, the other object is displayed by correcting the display position of one object, and one object can be displayed appropriately.

After that, the virtual object display control unit 16 determines whether the virtual object display position adjustment process is done for all virtual objects acquired in Step S37 (S72). The processing of Steps S60 to S72 is repeated until the virtual object display position adjustment process is done for all virtual objects.

### (Third embodiment)

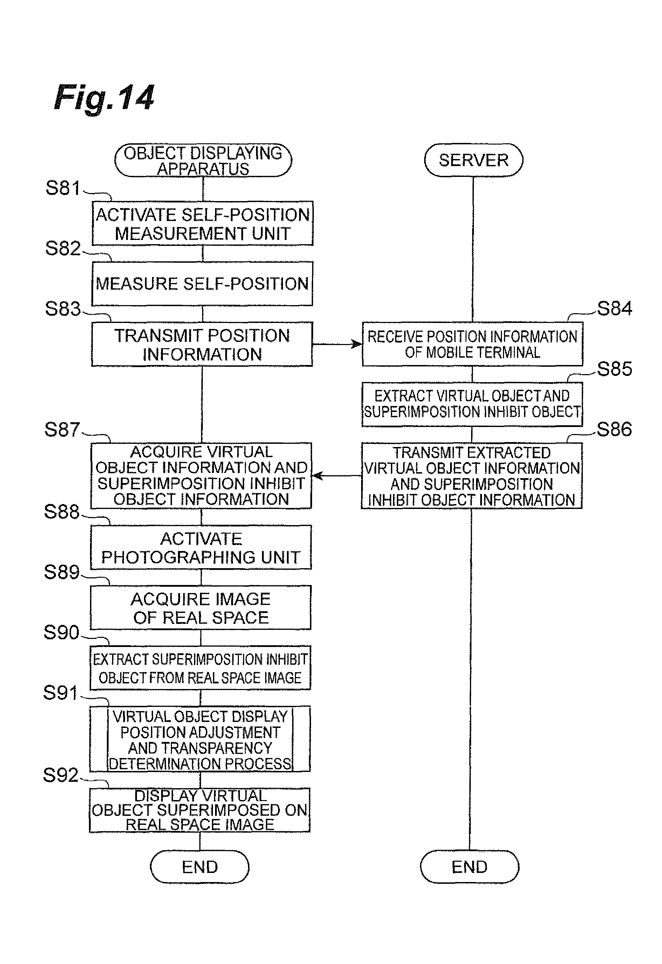

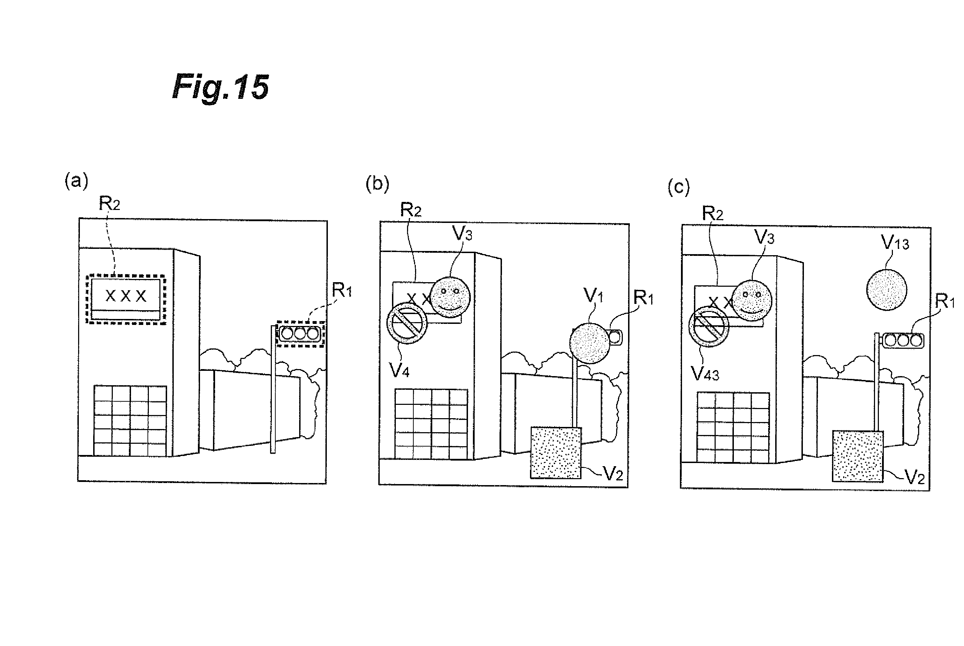

A process of an object display method in the object displaying apparatus 1 according to a third embodiment is described hereinafter with reference to Figs. 14 to 16. Fig. 14 is a timing chart showing a process performed in the object displaying system 7. Fig. 15 is a diagram showing an example of a display screen in the display unit 17 of the object displaying apparatus 1. Note that the functional configurations of the object displaying apparatus 1 and the server 3 are the same as those described in the first embodiment (Figs. 1 and 3).

The processing of Steps S81 to S89 in Fig. 14 is the same as the processing of Steps S31 to S39 in the second embodiment (Fig. 10), respectively.

Then, the image analysis unit 15 extracts a superimposition inhibit object from the image of the real space photographed by the photographing unit 14 based on the superimposition inhibit object information acquired by the superimposition inhibit object information acquisition unit 13 (S90). Fig. 15(a) is an example of extraction of an object from the image of the real space. As shown in Fig. 15(a), the image analysis unit 15 extracts superimposition inhibit objects R₁ and R₂ from the image of the real space. The superimposition inhibit object R₁ is the object extracted based on the superimposition inhibit object information with the item number 1 among the superimposition inhibit object information shown in Fig. 6. Further, superimposition inhibit object R₂ is the object extracted based on the superimposition inhibit object information with the item number 2 among the superimposition inhibit object information shown in Fig. 6.

Then, when, in the case where virtual objects are placed in the image of the real space based on the virtual object information acquired by the virtual object information acquisition unit 12, there is a virtual object that overlaps the superimposition inhibit object extracted by the image analysis unit 15, the virtual object display control unit 16 controls display of the virtual object so as not to hide the superimposition inhibit object. In this embodiment, the virtual object display control unit 16 performs a display position adjustment and transparency determination process on the virtual object (S91, virtual object display control step).

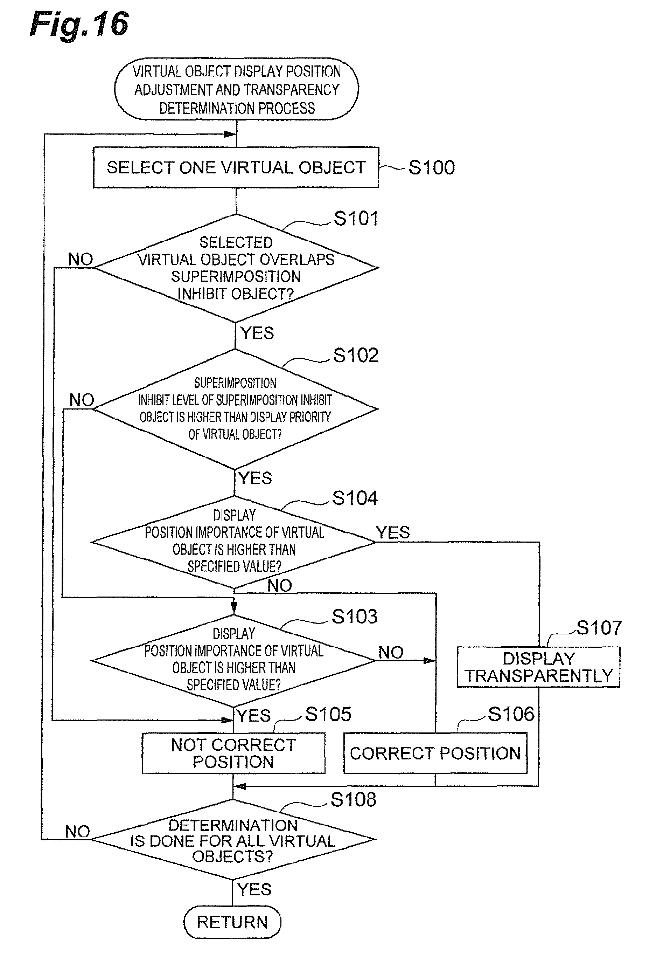

Fig. 16 is a flowchart showing the details of the virtual object display position adjustment and transparency determination process. The processing of Steps S 100 to S106 is the same as the processing of Steps S50 to S56 in the flowchart shown in Fig. 12, respectively.

Fig .15(b) is an example of placing virtual objects with the item numbers 1, 2, 3 and 4 among the virtual objects shown in Fig. 5 in an image of the real space in Step S101. As shown in Fig. 15(b), a virtual object V₁ has an overlap with the superimposition inhibit object R₁. Further, a virtual object V₂ does not have an overlap with any superimposition inhibit object. Further, virtual objects V₃ and V₄ have an overlap with the superimposition inhibit object R₂. Thus, in the display position adjustment and transparency determination process for the virtual objects V₁, V₃ and V₄, the process proceeds to Step S102. On the other hand, in the display position adjustment and transparency determination process for the virtual objects V₂, the process proceeds to Step S105.

In Step S107, the virtual object display control unit 16 controls display of the virtual object so as not to hide the superimposition inhibit object by displaying the virtual object transparently (S107). When the display position importance of the virtual object is high, it means that a relevance of the virtual object to the layout position is high, and therefore when the virtual object is displayed in a position different from the specified layout position, the possibility that information provided by the virtual object to a user is inappropriate is high. In this embodiment, because the virtual object is displayed transparently when the superimposition inhibit level of the superimposition inhibit object is higher than the display priority of the virtual object and the display position importance of the virtual object is high, it is possible to preferentially display the superimposition inhibit object and further display the virtual object in an appropriate position. The virtual object V₄ in Fig. 15(b) is displayed in a transparent manner as shown by a virtual object V₄₃ in Fig. 15(c).

After that, the virtual object display control unit 16 determines whether the virtual object display position adjustment and transparency determination process is done for all virtual objects acquired in Step S87 (S108). The processing of Steps S100 to S108 is repeated until the virtual object display position adjustment and transparency determination process is done for all virtual objects.

Referring back to Fig. 14, the display unit 17 displays the virtual object superimposed on the image of the real space based on the display control by the virtual object display control unit 16 (S92). Fig. 15(c) is an example of a display screen of virtual objects in the display unit 17. The virtual object V₁ in Fig. 15(b) is corrected in position so that it does not overlap the superimposition inhibit object R₁ as shown by a virtual object V₁₃ in Fig. 15(c). Because the virtual object V₂ does not have an overlap with the superimposition inhibit object, it is displayed in the layout position indicated by the position information contained in the virtual object information. The virtual object V₃ is displayed in the position overlapping the superimposition inhibit object R₂ without position correction. Further, the virtual object V₄ in Fig. 15(b) is displayed transparently as shown by a virtual object V₄₃ in Fig. 15(c).

The embodiments of the present invention are described in detail above. However, the present invention is not restricted to the above-described embodiments, and various changes and modifications may be made without departing from the scope of the invention.

### Industrial Applicability

According to the present invention, it is possible to perform display control so that a virtual object is not superimposed on an object to be preferentially displayed in a real space image in the AR technology.

### Reference Signs List

1...object displaying apparatus, 3... server, 5...base station, 7... object displaying system, 10... self-position measurement unit, 11...position, information transmitting unit, 12...virtual object information acquisition unit, 13...superimposition inhibit object information acquisition unit, 14... photographing unit, 15... image analysis unit, 16... virtual object display control unit, 17...display unit, 30...position information receiving unit, 31... virtual object extraction unit, 32 ... virtual object information storage unit, 33... superimposition inhibit object extraction unit, 34...superimposition inhibit object information storage unit, 35... object information transmitting unit, R₁,R₂...superimposition inhibit object, V₁,V₂,V₃,V₄,V₁₁,V₁₂,V₁₃,V₄₃...virtual object

## Claims

1. An object displaying apparatus for displaying an object superimposed on an image of a real space, comprising:
a virtual object information acquisition means for acquiring virtual object information related to a virtual object placed in the real space and containing information related to a layout position of the virtual object;
a superimposition inhibit object information acquisition means for acquiring superimposition inhibit object information related to a superimposition inhibit object existing in the real space and where superimposed display of the virtual object is inhibited;
a photographing means for taking an image of the real space;
an image analysis means for extracting the superimposition inhibit object from the image of the real space photographed by the photographing means based on the superimposition inhibit object information received by the superimposition inhibit object information acquisition means;
a virtual object display control means for, when the virtual object overlapping the superimposition inhibit object extracted by the image analysis means exists in a case where the virtual object is placed in the image of the real space based on the virtual object information acquired by the virtual object information acquisition means, controlling display of the virtual object so as not to hide the superimposition inhibit object; and
a display means for displaying the virtual object superimposed on the image of the real space based on the display control by the virtual object display control means.

2. The object displaying apparatus according to Claim 1, further comprising:
a self-position measurement means for measuring a located position of the object displaying apparatus; and
a position information transmitting means for transmitting position information related to the located position, wherein
the virtual object information acquisition means acquires the virtual object information extracted based on the position information, and
the superimposition inhibit object information acquisition means acquires the superimposition inhibit object information extracted based on the position information.

3. The object displaying apparatus according to Claim 1 or 2, wherein
the virtual object information contains a display priority indicating a level of priority to display the virtual object,
the superimposition inhibit object information contains a superimposition inhibit level indicating a level of inhibition of superimposition of another object on the superimposition inhibit object, and
when the superimposition inhibit level of the superimposition inhibit object is higher than the display priority of the virtual object, the virtual object display control means controls display of the virtual object so as not to hide the superimposition inhibit object by displaying the virtual object transparently.

4. The object displaying apparatus according to Claim 1 or 2, wherein
the virtual object information contains a display priority indicating a level of priority to display the virtual object,
the superimposition inhibit object information contains a superimposition inhibit level indicating a level of inhibition of superimposition of another object on the superimposition inhibit object, and
when the superimposition inhibit level of the superimposition inhibit object is higher than the display priority of the virtual object, the virtual object display control means controls display of the virtual object so as not to hide the superimposition inhibit object by not displaying the virtual object.

5. The object displaying apparatus according to Claim 1 or 2, wherein
the virtual object information contains a display priority indicating a level of priority to display the virtual object and a display position importance indicating a strength of a relevance of the virtual object to a layout position,
the superimposition inhibit object information contains a superimposition inhibit level indicating a level of inhibition of superimposition of another object on the superimposition inhibit object, and
when the superimposition inhibit level of the superimposition inhibit object is higher than the display priority of the virtual object and the display position importance of the virtual object is higher than a pre-specified value, the virtual object display control means controls display of the virtual object so as not to hide the superimposition inhibit object by not displaying the virtual object.

6. The object displaying apparatus according to Claim 1 or 2, wherein
the virtual object information contains a display priority indicating a level of priority to display the virtual object and a display position importance indicating a strength of a relevance of the virtual object to a layout position,
the superimposition inhibit object information contains a superimposition inhibit level indicating a level of inhibition of superimposition of another object on the superimposition inhibit object, and
when the superimposition inhibit level of the superimposition inhibit object is higher than the display priority of the virtual object and the display position importance of the virtual object is higher than a pre-specified value, the virtual object display control means controls display of the virtual object so as not to hide the superimposition inhibit object by displaying the virtual object transparently.

7. The object displaying apparatus according to Claim 5 or 6, wherein
when the display position importance of the virtual object is not higher than a pre-specified value, the virtual object display control means controls display of the virtual object so as not to hide the superimposition inhibit object by correcting a display position of the virtual object.

8. The object displaying apparatus according to any one of Claims 5 to 7, wherein
when the superimposition inhibit level of the superimposition inhibit object is not higher than the display priority of the virtual object and the display position importance of the virtual object is higher than a pre-specified value, the virtual object display control means displays the virtual object in the layout position in the image of the real space.

9. The object displaying apparatus according to any one of Claims 5 to 8, wherein
in a case where one virtual object overlaps another virtual object, when the display position importance of the one virtual object is higher than the display position importance of the another virtual object, the virtual object display control means displays the one virtual object in the layout position of the one virtual object in the image of the real space.

10. The object displaying apparatus according to Claim 9, wherein
in a case where one virtual object overlaps another virtual object, when the display position importance of the one virtual object is not higher than the display position importance of the another virtual object, the virtual object display control means controls display of the one virtual object so as not to hide the another virtual object by correcting a display position of the one virtual object.

11. The object displaying apparatus according to Claim 1 or 2, wherein
the virtual object information contains a display position importance indicating a strength of a relevance of the virtual object to a layout position,
the superimposition inhibit object information contains a superimposition inhibit level indicating a level of inhibition of superimposition of another object on the superimposition inhibit object, and
when the superimposition inhibit level of the superimposition inhibit object is higher than the display position importance of the virtual object, the virtual object display control means controls display of the virtual object so as not to hide the superimposition inhibit object by correcting a display position of the virtual object, and when the superimposition inhibit level of the superimposition inhibit object is not higher than the display position importance of the virtual object, the virtual object display control means controls display of the virtual object so as not to hide the superimposition inhibit object by displaying the virtual object transparently or by not displaying the virtual object.

12. An object displaying system including an object displaying apparatus for displaying an object superimposed on an image of a real space, and a server capable of communicating with the object displaying apparatus,
the object displaying apparatus comprising:
a self-position measurement means for measuring a located position of the object displaying apparatus;
a position information transmitting means for transmitting position information related to the located position to the server;
a virtual object information acquisition means for acquiring virtual object information related to a virtual object placed in the real space and containing information related to a layout position of the virtual object from the server;
a superimposition inhibit object information acquisition means for acquiring superimposition inhibit object information related to a superimposition inhibit object existing in the real space and where superimposed display of the virtual object is inhibited from the server;
a photographing means for taking an image of the real space;
an image analysis means for extracting the superimposition inhibit object from the image of the real space photographed by the photographing means based on the superimposition inhibit object information acquired by the superimposition inhibit object information acquisition means;
a virtual object display control means for, when the virtual object overlapping the superimposition inhibit object extracted by the image analysis means exists in a case where the virtual object is placed in the image of the real space based on the virtual object information received by the virtual object information acquisition means, controlling display of the virtual object so as not to hide the superimposition inhibit object; and
a display means for displaying the virtual object superimposed on the image of the real space based on the display control by the virtual object display control means, and
the server comprising:
a position information receiving means for receiving the position information from the object displaying apparatus;
a virtual object information storage means for storing the virtual object information;
a virtual object extraction means for extracting virtual object information of a virtual object located within a pre-specified distance from a position indicated by the position information received by the position information receiving means from the virtual object information storage means;
a superimposition inhibit object information storage means for storing the superimposition inhibit object information;
a superimposition inhibit object extraction means for extracting the superimposition inhibit object information of the superimposition inhibit object located within a pre-specified distance from a position indicated by the position information received by the position information receiving means from the superimposition inhibit object information storage means; and
an object information transmitting means for transmitting the virtual object information extracted by the virtual object extraction means and the superimposition inhibit object information extracted by the superimposition inhibit object extraction means to the object displaying apparatus.

13. An object displaying method in an object displaying apparatus for displaying an object superimposed on an image of a real space, comprising:
a virtual object information acquisition step of acquiring virtual object information related to a virtual object placed in the real space and containing information related to a layout position of the virtual object;
a superimposition inhibit object information acquisition step of acquiring superimposition inhibit object information related to a superimposition inhibit object existing in the real space and where superimposed display of the virtual object is inhibited;
a photographing step of taking an image of the real space;
an image analysis step of extracting the superimposition inhibit object from the image of the real space photographed in the photographing step based on the superimposition inhibit object information received in the superimposition inhibit object information acquisition step;
a virtual object display control step of, when the virtual object overlapping the superimposition inhibit object extracted in the image analysis step exists in a case where the virtual object is placed in the image of the real space based on the virtual object information received in the virtual object information acquisition step, controlling display of the virtual object so as not to hide the superimposition inhibit object; and
a display step of displaying the virtual object superimposed on the image of the real space based on the display control in the virtual object display control step.
